# FASCICULE DE BREVET EUROPEEN

(11) **EP 4 066 390 B1**
(45) Date de publication et mention de la délivrance du brevet: **29.11.2023**
(21) Numéro de dépôt: 20797687.9
(22) Date de dépôt: 16.10.2020
(51) Int. Cl.: H04B 1/16, H04W 52/02

(54) **ÉQUIPEMENT NOMADE POUVANT REMPLIR LA FONCTION DE RÉPÉTEUR OU D'EXTENDEUR**
ROAMINGVORRICHTUNG ZUR DURCHFÜHRUNG EINER REPEATER- ODER EXTENDERFUNKTION
ROAMING DEVICE ABLE TO PERFORM A REPEATER OR EXTENDER FUNCTION

(30) Priorité: 26.11.2019 FR 1913216
(43) Date de publication de la demande: 05.10.2022
(73) Titulaire: SAGEMCOM BROADBAND SAS, 92500 Rueil-Malmaison (FR)
(72) Inventeur: NEDELCU, Radu, 92500 RUEIL MALMAISON (FR); BERGER, Jérôme, 92500 RUEIL MALMAISON (FR)
(74) Mandataire: Lavaud, Thomas
(86) Numéro de dépôt international: PCT/EP2020/079203
(87) Numéro de publication internationale: WO 2021/104746

(56) Documents cités:
- EP-A1- 3 489 797
- WO-A1-2010/075897
- US-A1- 2018 199 259

## Description

L'invention concerne le domaine des équipements nomades susceptibles d'être montés sur un socle d'alimentation.

### ARRIERE PLAN DE L'INVENTION

Aujourd'hui, il est possible dans la plupart des habitations, des bureaux et des espaces publics (magasins, gares, aéroports, etc.) de connecter un équipement à Internet via un point d'accès sans fil, par exemple via un point d'accès Wi-Fi.

La qualité de la connexion dépend d'un certain nombre de paramètres, et notamment de la distance entre l'équipement et le point d'accès sans fil, de l'épaisseur des murs, des interférences avec d'autres équipements électroniques, etc.

Pour améliorer la connexion, on utilise des répéteurs ou bien des extendeurs.

L'utilisation de ces équipements supplémentaires peut complexifier l'installation et être coûteuse, surtout si la zone de couverture du point d'accès sans fil doit être étendue.

Le document WO2010075897 divulgue un équipement nomade.

### OBJET DE L'INVENTION

L'invention a pour objet d'améliorer la connexion et d'étendre la zone de couverture d'un point d'accès sans fil, de manière peu coûteuse.

### RESUME DE L'INVENTION

En vue de la réalisation de ce but, on propose un équipement nomade agencé pour fonctionner en étant monté ou non sur un socle d'alimentation, et comprenant :
- une batterie destinée à alimenter l'équipement nomade lorsqu'il ne reçoit pas une alimentation externe via le socle d'alimentation ;
- des moyens de communication comprenant un module client, ainsi qu'un module répéteur ou un module extendeur, les moyens de communication étant configurables selon un premier mode, dans lequel le module client est activé et le module répéteur ou le module extendeur est désactivé, de sorte que l'équipement nomade est agencé pour remplir une fonction de client d'un point d'accès sans fil, et selon un deuxième mode, dans lequel le module client est activé et le module répéteur ou le module extendeur est activé, de sorte que l'équipement nomade est agencé pour remplir à la fois la fonction de client et une fonction de répéteur ou une fonction d'extendeur ;
- des moyens de configuration agencés pour configurer les moyens de communication selon le premier mode lorsque l'équipement nomade ne reçoit pas l'alimentation externe, et selon le deuxième mode lorsque l'équipement nomade reçoit l'alimentation externe via le socle d'alimentation.

L'équipement nomade selon l'invention peut donc remplir, en plus de la fonction de client, la fonction de répéteur ou la fonction d'extendeur, ce qui permet d'améliorer la connexion à un point d'accès sans fil d'autres équipements clients et donc d'étendre la zone de couverture du point d'accès sans fil. Cette amélioration de la connexion est réalisée sans utiliser d'équipements supplémentaires dédiés à l'amélioration de la connexion, et donc à moindre coût.

On note par ailleurs que le module répéteur et le module extendeur sont possiblement des modules logiciels de sorte que leur implémentation ne nécessite pas de modification *hardware* (matérielle) majeure d'un *design* d'équipement nomade préexistant. Le coût de la mise en oeuvre de ces fonctions est donc limité.

Comme la fonction de répéteur et la fonction d'extendeur ont une consommation d'énergie électrique relativement importante, l'équipement nomade est agencé pour remplir l'une de ces fonctions uniquement lorsqu'il est monté sur un socle d'alimentation. L'autonomie de l'équipement nomade n'est donc pas impactée par la mise en oeuvre de la fonction de répéteur ou de la fonction d'extendeur.

On propose aussi un équipement nomade tel que celui qui vient d'être décrit, dans lequel les moyens de communication comprennent un module répéteur qui est un module répéteur Wi-Fi.

On propose aussi un équipement nomade tel que celui qui vient d'être décrit, dans lequel les moyens de communication comprennent un module extendeur qui est un module extendeur Wi-Fi, l'équipement nomade comprenant en outre une interface Ethernet, l'équipement nomade étant agencé pour être relié au point d'accès sans fil via l'interface Ethernet.

On propose aussi un équipement nomade tel que celui qui vient d'être décrit, dans lequel les moyens de communication comprennent un module émetteur/récepteur comportant une première voie de communication comprenant un premier amplificateur d'une première puissance et une deuxième voie de communication comprenant un deuxième amplificateur d'une deuxième puissance supérieure à la première puissance, la première voie de communication étant désactivée lorsque les moyens de communication sont configurés selon le deuxième mode, la deuxième voie de communication étant désactivée lorsque les moyens de communication sont configurés selon le premier mode.

On propose de plus un équipement nomade tel que celui qui vient d'être décrit, dans lequel les moyens de communication comprennent un module émetteur/récepteur, au moins une première antenne reliée à au moins une première sortie du module émetteur/récepteur et au moins une deuxième antenne, les moyens de configuration comprenant un premier interrupteur monté entre une deuxième sortie du module émetteur/récepteur et la deuxième antenne, le premier interrupteur étant ouvert et la deuxième antenne étant déconnectée de la deuxième sortie du module émetteur/récepteur lorsque les moyens de communication sont configurés selon le premier mode, le premier interrupteur étant fermé et la deuxième antenne étant connectée à la deuxième sortie du module émetteur/récepteur lorsque les moyens de communication sont configurés selon le deuxième mode.

On propose aussi un équipement nomade tel que celui qui vient d'être décrit, dans lequel les moyens de communication comprennent un module émetteur/récepteur et au moins une première antenne reliée au module émetteur/récepteur, les moyens de configuration comprenant un deuxième interrupteur monté entre une troisième sortie du module émetteur/récepteur et une sortie de l'équipement nomade, le deuxième interrupteur étant ouvert et la troisième sortie du module émetteur/récepteur étant déconnectée de la sortie de l'équipement nomade lorsque les moyens de communication sont configurés selon le premier mode, le deuxième interrupteur étant fermé et la troisième sortie du module émetteur/récepteur étant connectée via la sortie de l'équipement nomade à au moins une troisième antenne montée sur le socle d'alimentation lorsque les moyens de communication sont configurés selon le deuxième mode.

On propose en outre un équipement nomade tel que celui qui vient d'être décrit, dans lequel les moyens de configuration sont agencés pour faire basculer les moyens de communication depuis le premier mode dans le deuxième mode uniquement au cours d'une phase de réception de signaux du module client ou au cours d'une phase inactive du module client.

On propose aussi un équipement nomade tel que celui qui vient d'être décrit, l'équipement nomade étant une enceinte connectée.

On propose en outre un procédé de configuration d'un équipement nomade tel que celui qui vient d'être décrit, comprenant les étapes de :
- détecter si l'équipement nomade reçoit ou non l'alimentation externe via le socle d'alimentation ;
- si l'équipement nomade ne reçoit pas l'alimentation externe, configurer les moyens de communication selon le premier mode ;
- si l'équipement nomade reçoit l'alimentation externe, configurer les moyens de communication selon le deuxième mode.

On propose aussi un programme d'ordinateur comprenant des instructions qui conduisent l'équipement nomade tel que décrit à exécuter les étapes du procédé de configuration cidessus.

On propose par ailleurs un support d'enregistrement lisible par ordinateur, sur lequel est enregistré le programme d'ordinateur qui vient d'être décrit.

L'invention sera mieux comprise à la lumière de la description qui suit de modes de mise en oeuvre particuliers non limitatifs de l'invention.

### BREVE DESCRIPTION DES DESSINS

Il sera fait référence aux dessins annexés, parmi lesquels :
[Fig. 1] la figure 1 représente un point d'accès Wi-Fi et une enceinte connectée selon un premier mode de réalisation de l'invention, les moyens de communication de l'enceinte connectée étant configurés selon un premier mode ;
[Fig. 2] la figure 2 représente le point d'accès Wi-Fi, l'enceinte connectée montée sur un socle d'alimentation, et un équipement client, les moyens de communication de l'enceinte connectée étant configurés selon un deuxième mode ;
[Fig. 3] la figure 3 représente schématiquement les moyens de communication ;
[Fig. 4] la figure 4 représente une première voie de communication et une deuxième voie de communication des moyens de communication ;
[Fig. 5] la figure 5 représente l'enceinte connectée comprenant deux premières antennes et une deuxième antenne ;
[Fig. 6] la figure 6 représente l'enceinte connectée de la figure 5 qui est montée sur un socle d'alimentation comprenant une troisième antenne ;
[Fig. 7] la figure 7 représente un point d'accès Wi-Fi et une enceinte connectée selon un deuxième mode de réalisation de l'invention, les moyens de communication de l'enceinte connectée étant configurés selon un premier mode ;
[Fig. 8] la figure 8 représente le point d'accès Wi-Fi, l'enceinte connectée montée sur un socle d'alimentation, et un équipement client, les moyens de communication de l'enceinte connectée étant configurés selon un deuxième mode.

### DESCRIPTION DETAILLEE DE L'INVENTION

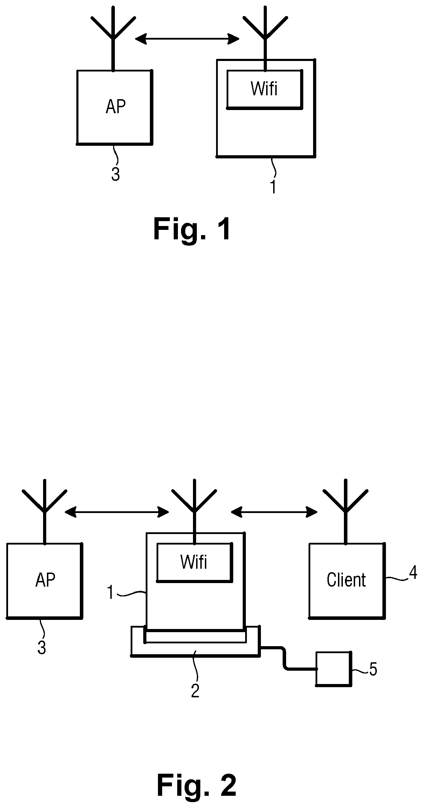

En référence aux figures 1 et 2, l'équipement nomade selon l'invention est ici une enceinte connectée selon un premier mode de réalisation de l'invention.

L'enceinte connectée 1 peut fonctionner en étant montée ou non sur un socle d'alimentation 2.

Lorsque l'enceinte connectée 1 n'est pas montée sur le socle d'alimentation 2, comme cela est visible sur la figure 1, l'enceinte connectée 1 remplit une fonction de client (en complément bien sûr de sa fonction principale d'enceinte audio) et peut se connecter à un point d'accès Wi-Fi 3 via une connexion Wi-Fi.

Lorsque l'enceinte connectée 1 est montée sur le socle d'alimentation 2, comme cela est visible sur la figure 2, l'enceinte connectée 1 remplit à la fois la fonction de client mais aussi la fonction de répéteur Wi-Fi. Un autre équipement client 4 peut donc se connecter au point d'accès Wi-Fi 3 via l'enceinte connectée 1. Le socle d'alimentation 2 est normalement branché sur le secteur 5.

Ici, par « fonction de répéteur », on entend une fonction consistant à recevoir un signal Wi-Fi, à amplifier et éventuellement à traiter le signal Wi-Fi pour le rediffuser sans modifier son contenu.

L'enceinte connectée 1 comporte tout d'abord des moyens d'alimentation comprenant une batterie et une interface d'alimentation externe. Les moyens d'alimentation génèrent une tension d'alimentation générale Vcc qui alimente les composants de l'enceinte connectée 1.

Lorsque l'enceinte connectée 1 n'est pas montée sur le socle d'alimentation 2, ou bien lorsque l'enceinte connectée 1 est montée sur le socle d'alimentation 2 mais que celui-ci n'est pas branché sur le secteur 5, l'enceinte connectée 1 est alimentée par la batterie uniquement.

Lorsque l'enceinte connectée 1 est montée sur le socle d'alimentation 2 et que celui-ci est branché sur le secteur 5, l'interface d'alimentation externe des moyens d'alimentation de l'enceinte connectée 1 reçoit du socle d'alimentation 2 une alimentation externe (issue du secteur 5). L'enceinte connectée 1 est alors alimentée, entièrement ou au moins partiellement, par cette alimentation externe.

Ici, le socle d'alimentation 2 comprend un premier enroulement formant une antenne primaire.

L'interface d'alimentation externe de l'enceinte connectée 1 comprend un deuxième enroulement formant une antenne secondaire.

Lorsque l'enceinte connectée 1 est montée sur le socle d'alimentation 2 et que celui-ci est relié au secteur 5, un champ magnétique est généré par le socle d'alimentation 2 via l'antenne primaire. Un courant induit est alors généré sous une tension induite dans l'antenne secondaire de l'enceinte connectée 1. Le courant induit et la tension induite forment l'alimentation externe qui vient d'être évoquée.

L'enceinte connectée 1 comprend de plus des moyens de communication et des moyens de configuration.

Les moyens de configuration sont agencés pour configurer les moyens de communication selon un premier mode lorsque l'enceinte connectée 1 ne reçoit pas l'alimentation externe, et selon un deuxième mode lorsque l'enceinte connectée 1 reçoit l'alimentation externe via le socle d'alimentation 2.

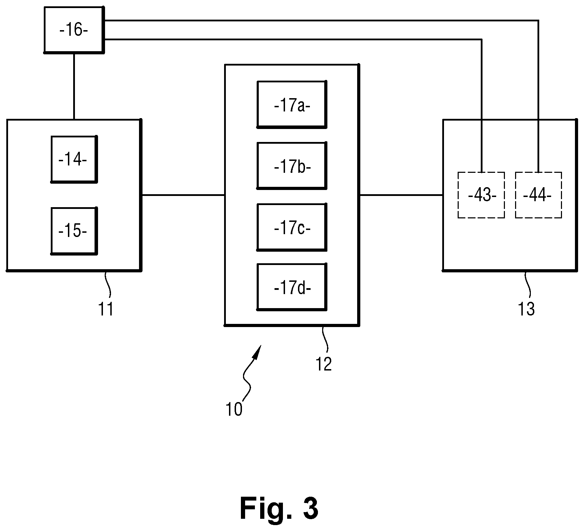

En référence à la figure 3, les moyens de communication 10 comprennent, d'amont en aval, une unité de communication 11, un module émetteur/récepteur 12, et un ensemble d'antennes 13.

L'unité de communication 11 comprend un module client 14 et un module répéteur 15. Le module répéteur 15 met en oeuvre la norme 802.11s.

Le module client 14 et le module répéteur 15 sont des modules logiciels.

Les moyens de configuration comprennent quant à eux tout d'abord un composant de traitement 16 adapté à exécuter des instructions d'un programme pour mettre en oeuvre les étapes de configuration qui vont être décrites. Le composant de traitement 16 est par exemple un microcontrôleur, un processeur, ou bien un circuit logique programmable tel qu'un FPGA (pour *Field Programmable Gate Arrays*) ou un ASIC (pour *Application Spécifie Integrated Circuit) .*

Lorsque l'enceinte connectée 1 ne reçoit pas l'alimentation externe, le composant de traitement 16 active le module client 14 mais désactive le module répéteur 15. Lorsque l'enceinte connectée 1 reçoit l'alimentation externe via le socle d'alimentation 2, le composant de traitement 16 active à la fois le module client 14 et le module répéteur 15. Le module client 14 est donc activé en permanence. Toutes ses tâches de transmission et de réception ne sont pas interrompues. L'activation du module répéteur 15 active une passerelle de données entre le module répéteur 15 et l'autre équipement client 4.

Ainsi, lorsque les moyens de communication 10 sont configurés selon le premier mode, le module client 14 est activé et le module répéteur 15 est désactivé, et lorsque les moyens de communication 10 sont configurés selon le deuxième mode, le module client 14 est activé et le module répéteur 15 est activé.

Le module émetteur/récepteur 12 est relié aux sorties du module client 14 et du module répéteur 15 de l'unité de communication 11.

Le module émetteur/récepteur 12 est un module *hardware* (« matériel ») comprenant des composants électroniques.

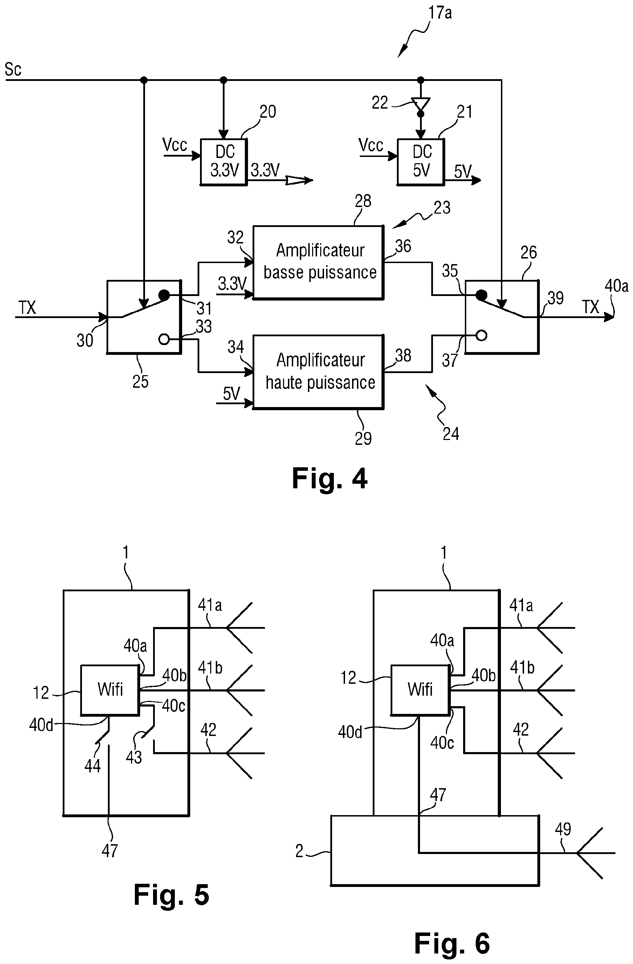

Le module émetteur/récepteur 12 comprend ici un premier canal d'émission 17a, un deuxième canal d'émission 17b, un troisième canal d'émission 17c et un quatrième canal d'émission 17d. Seul le premier canal d'émission 17a est représenté sur la figure 4.

Le premier canal d'émission 17a comporte un premier composant d'alimentation 20, un deuxième composant d'alimentation 21, une porte NON 22, une première voie de communication 23, une deuxième voie de communication 24, un premier commutateur 25 et un deuxième commutateur 26. Le premier commutateur 25 et le deuxième commutateur 26 sont des commutateurs à deux voies.

Le premier composant d'alimentation 20 génère une première tension d'alimentation continue de 3,3V et est lui-même alimenté par la tension d'alimentation générale Vcc. Le deuxième composant d'alimentation 21 génère une deuxième tension d'alimentation continue de 5V et est lui-même alimenté par la tension d'alimentation générale Vcc.

La première voie de communication 23 comprend un premier amplificateur de puissance 28 alimenté par la première tension d'alimentation. Le premier amplificateur 28 produit une première puissance. La deuxième voie de communication 24 comprend un deuxième amplificateur de puissance 29 alimenté par la deuxième tension d'alimentation. Le deuxième amplificateur 29 produit une deuxième puissance (1W maximum) supérieure à la première puissance (100mW maximum). Le premier amplificateur 28 est un amplificateur « basse puissance » et le deuxième amplificateur 29 est un amplificateur « haute puissance ».

Le premier commutateur 25 présente une entrée 30 reliée à une sortie de l'unité de communication 11, une première sortie 31 reliée à une entrée 32 du premier amplificateur 28 et une deuxième sortie 33 reliée à une entrée 34 du deuxième amplificateur 29. Le deuxième commutateur 26 présente une première entrée 35 reliée à une sortie 36 du premier amplificateur 28, une deuxième entrée 37 reliée à une sortie 38 du deuxième amplificateur 29, et une sortie 39 qui est reliée à une première sortie 40a du premier canal d'émission 17a.

Lorsque le composant de traitement 16 configure les moyens de communication 10 selon le premier mode, il produit un signal de commande Sc à l'état haut. Le signal de commande Sc à l'état haut pilote le premier commutateur 25 de sorte que la sortie de l'unité de communication 11 soit reliée à la première sortie 31 du premier commutateur 25 et donc à l'entrée 32 du premier amplificateur 28. Le signal de commande Sc à l'état haut active le premier composant d'alimentation 20 qui génère la première tension d'alimentation qui alimente et active le premier amplificateur 28. Un signal à l'état bas est produit en sortie de la porte NON 22 et désactive le deuxième composant d'alimentation 21 et donc le deuxième amplificateur 29 (et donc la deuxième voie de communication 24). Le signal de commande Sc à l'état haut pilote le deuxième commutateur 26 de sorte que la première entrée 35 du deuxième commutateur 26 et donc la sortie 36 du premier amplificateur 28 soient reliées à la sortie 39 du deuxième commutateur 26 et donc à la première sortie 40a du premier canal d'émission 17a. La première sortie 40a est aussi une première sortie du module émetteur/récepteur 12.

Ainsi, des signaux Wi-Fi TX produits par l'unité de communication 11 sont diffusés via la première voie de communication 23.

Au contraire, lorsque le composant de traitement 16 configure les moyens de communication 10 selon le deuxième mode, il produit un signal de commande Sc à l'état bas. Le signal de commande Sc à l'état bas pilote le premier commutateur 25 de sorte que la sortie de l'unité de communication 11 soit reliée à la deuxième sortie 33 du premier commutateur 25 et donc à l'entrée 34 du deuxième amplificateur 29. Le signal de commande Sc à l'état bas désactive le premier composant d'alimentation 20 et donc désactive le premier amplificateur 28 (et donc la première voie de communication 23). Un signal à l'état haut est produit en sortie de la porte NON 22 et active le deuxième composant d'alimentation 21 et donc le deuxième amplificateur 29. Le signal de commande Sc à l'état bas pilote le deuxième commutateur 26 de sorte que la deuxième entrée 37 du deuxième commutateur 26 et donc la sortie 38 du deuxième amplificateur 29 soient reliées à la sortie 39 du deuxième commutateur 26 et donc à la première sortie 40a du premier canal d'émission 17a.

Ainsi, des signaux Wi-Fi TX produits par l'unité de communication 11 sont diffusés via la deuxième voie de communication 24.

Le deuxième canal d'émission 17b est semblable au premier canal d'émission 17a et comporte une première sortie 40b (qui est aussi une première sortie du module émetteur/récepteur 12).

Le troisième canal d'émission 17c comprend uniquement la deuxième voie de communication et comporte une deuxième sortie 40c (qui est aussi une deuxième sortie du module émetteur/récepteur 12).

Le quatrième canal d'émission 17d comprend uniquement la deuxième voie de communication et comporte une troisième sortie 40d (qui est aussi une troisième sortie du module émetteur/récepteur 12).

En référence aux figures 5 et 6, l'ensemble d'antenne 13 comprend au moins une première antenne, en l'occurrence deux premières antennes 41a, 41b et au moins une deuxième antenne, en l'occurrence une deuxième antenne 42.

Les moyens de configuration comprennent quant à eux, outre le composant de traitement 16, un premier interrupteur 43 et un deuxième interrupteur 44.

Le premier interrupteur 43 est monté entre la deuxième sortie 40c du troisième canal d'émission 17c du module émetteur/récepteur 12 et la deuxième antenne 42.

Le deuxième interrupteur 44 est monté entre la troisième sortie 40d du quatrième canal d'émission 17d et une sortie 47 de l'enceinte connectée 1.

La première antenne 41a et la première antenne 41b sont connectées de manière permanente respectivement à la première sortie 40a du premier canal d'émission 17a et à la première sortie 40b du deuxième canal d'émission 17b du module émetteur/récepteur 12, alors que la deuxième antenne 42 est connectée à la deuxième sortie 40c du troisième canal d'émission 17c via le premier interrupteur 43.

Lorsque l'enceinte connectée 1 est montée sur le socle d'alimentation 2, la sortie 47 de l'enceinte connectée 1 est connectée à une entrée du socle d'alimentation 2 qui est elle-même reliée à au moins une troisième antenne, en l'occurrence à une troisième antenne 49, montée sur le socle d'alimentation 2.

Le composant de traitement 16 pilote le premier interrupteur 43 et le deuxième interrupteur 44 de sorte que, lorsque les moyens de communication 10 sont configurés selon le premier mode, le premier interrupteur 43 et le deuxième interrupteur 44 sont ouverts. La deuxième antenne 42 et la troisième antenne 49 ne sont donc pas connectées au module émetteur/récepteur 12. L'alimentation des amplificateurs de puissance du troisième canal d'émission 17c et du quatrième canal d'émission 17d est coupée.

Par contre, lorsque les moyens de communication 10 sont configurés selon le deuxième mode, le premier interrupteur 43 et le deuxième interrupteur 44 sont fermés. La deuxième sortie 40c du module émetteur/récepteur 12 est reliée à la deuxième antenne 42, et la troisième sortie 40d du module émetteur/récepteur 12 est reliée à la troisième antenne 49.

Ainsi, lorsque l'enceinte connectée 1 est alimentée uniquement par la batterie, seules les deux premières antennes 41a, 41b sont utilisées. Ces deux premières antennes 41a, 41b permettent d'assurer une bande passante suffisante pour la seule fonction de client Wi-Fi. On réduit de la sorte la consommation électrique de l'enceinte connectée 1. L'enceinte connectée 1 n'assure pas la fonction de répéteur.

Par contre, lorsque, lorsque l'enceinte connectée 1 est alimentée via le socle d'alimentation 2, les deux premières antennes 41a, 41b ainsi que la deuxième antenne 42 et la troisième antenne 49 sont utilisées. On maximise ainsi les performances du système qui est alors en mesure de remplir la fonction de répéteur. La fonction de répéteur nécessite en effet un débit plus élevé et donc un nombre d'antennes plus important. On note que la troisième antenne 49 (il pourrait y en avoir plusieurs) est placée sur le socle d'alimentation 2 de manière à améliorer la diversité du rayonnement généré par l'ensemble des antennes.

On note que le composant de traitement 16 des moyens de configuration fait basculer les moyens de communication 10 depuis le premier mode dans le deuxième mode uniquement au cours d'une phase de réception par le module client 14 de signaux Wi-Fi ou bien au cours d'une phase inactive du module client 14. On empêche ainsi tout perte de paquets de données.

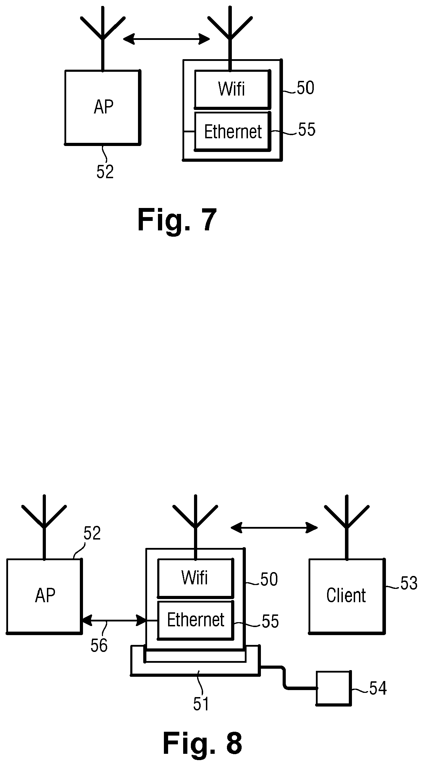

En référence aux figures 7 et 8, on décrit maintenant une enceinte connectée selon un deuxième mode de réalisation de l'invention 50.

Lorsque l'enceinte connectée 50 n'est pas montée sur le socle d'alimentation 51, comme cela est visible sur la figure 7, l'enceinte connectée 50 remplit une fonction de client et peut se connecter à un point d'accès Wi-Fi 52 via une connexion Wi-Fi.

Lorsque l'enceinte connectée 50 est montée sur le socle d'alimentation 51, comme cela est visible sur la figure 8, l'enceinte connectée 50 remplit à la fois la fonction de client mais aussi la fonction d'extendeur Wi-Fi. Un autre équipement client 53 peut donc se connecter au point d'accès Wi-Fi 52 via l'enceinte connectée 50. Le socle d'alimentation 51 est normalement branché sur le secteur 54.

Ici, par « fonction d'extendeur », on entend une fonction consistant à recevoir un premier signal selon un premier protocole (filaire ou non), à amplifier et éventuellement à traiter le premier signal pour obtenir un deuxième signal selon un deuxième protocole d'un réseau sans fil, et à diffuser le deuxième signal.

Ici, le premier signal est un signal Ethernet et le deuxième signal est un signal Wi-Fi.

L'enceinte connectée 50 se distingue de l'enceinte connectée 1 tout d'abord en ce que l'unité de communication de l'enceinte connectée 50 comprend un module extendeur et non un module répéteur. Le module extendeur est un module logiciel.

L'enceinte connectée 50 se distingue par ailleurs de l'enceinte connectée 1 en ce qu'elle comprend une interface réseau filaire, ici une interface Ethernet 55. L'enceinte connectée 50 est reliée au point d'accès Wi-Fi 52 via son interface Ethernet 55 et via le socle d'alimentation 51 qui est lui-même relié au point d'accès Wi-Fi 52 via un câble Ethernet 56.

Ici, par ailleurs, l'enceinte connectée 50 ne comprend pas d'antenne secondaire, et le socle d'alimentation 51 ne comprend pas d'antenne primaire pour transmettre l'alimentation externe.

Le socle d'alimentation 51 comprend un premier connecteur. L'enceinte connectée 50 comprend un deuxième connecteur complémentaire du premier connecteur.

L'interface d'alimentation externe de l'enceinte connectée 50 est reliée à deux broches d'alimentation du deuxième connecteur, et l'interface Ethernet est reliée à six broches de signal du deuxième connecteur.

La transmission de l'alimentation externe et les échanges de signaux entre le point d'accès Wi-Fi 52 et l'enceinte connectée 50 ne sont donc pas réalisés par des moyens « sans fil », comme c'est le cas pour l'enceinte connectée 1, mais via le premier connecteur et le deuxième connecteur (et le câble Ethernet 56 pour les signaux).

Bien entendu, l'invention n'est pas limitée aux modes de réalisation décrits mais englobe toute variante entrant dans le champ de l'invention telle que définie par les revendications.

Tout d'abord, on note qu'il n'est pas obligatoire d'utiliser des amplificateurs de puissance différents en mode client et en mode répéteur ou extendeur. On pourrait avoir un unique amplificateur de puissance alimenté en 5V lorsque l'enceinte connectée est montée sur le socle d'alimentation, et en 3,3V lorsque l'enceinte connectée est sur batterie. Cette solution est plus simple et moins coûteuse.

Cependant, il est préférable, pour obtenir le maximum d'efficacité énergétique lorsque l'enceinte connectée fonctionne sur batterie, d'utiliser des amplificateurs de puissance dédiés à chaque mode. En effet, à puissance de sortie égale, l'amplificateur basse puissance a un rendement meilleur que l'amplificateur haute puissance.

Les interfaces électriques décrites ici entre le socle d'alimentation et l'enceinte connectées sont des exemples non limitatifs. Dans le premier mode de réalisation, l'alimentation externe pourrait par exemple être transmise via un premier connecteur du socle d'alimentation et un deuxième connecteur de l'enceinte connectée. Dans le deuxième mode de réalisation, les signaux pourraient par exemple être échangés par courants porteurs en ligne circulant sur les deux broches d'alimentation du premier connecteur et du deuxième connecteur. Les six broches de signal ne sont donc pas nécessaires, ce qui simplifie grandement le premier connecteur et le deuxième connecteur.

On note qu'il n'est pas nécessaire d'activer des antennes supplémentaires lorsque l'enceinte connectée est reliée au secteur.

On a décrit une enceinte connectée selon un premier mode de réalisation comprenant un module répéteur, et une enceinte connectée selon un deuxième mode de réalisation comprenant un module extendeur. Bien sûr, l'enceinte connectée selon l'invention pourrait avoir à la fois un module répéteur et un module extendeur qui seraient tous deux désactivés lorsque les moyens de communication sont configurés selon le premier mode.

L'équipement nomade n'est pas nécessairement une enceinte connectée, mais pourrait être un autre équipement, par exemple une montre connectée, un *smartphone,* une tablette, un ordinateur portable, etc.

## Revendications

1. Equipement nomade agencé pour fonctionner en étant monté ou non sur un socle d'alimentation (2 ; 51), et comprenant :
- une batterie destinée à alimenter l'équipement nomade (1 ; 50) lorsqu'il ne reçoit pas une alimentation externe via le socle d'alimentation ;
- des moyens de communication (10) comprenant un module client (14), ainsi qu'un module répéteur (15) ou un module extendeur, les moyens de communication étant configurables selon un premier mode, dans lequel le module client est activé et le module répéteur ou le module extendeur est désactivé, de sorte que l'équipement nomade est agencé pour remplir une fonction de client d'un point d'accès sans fil (3 ; 52), et selon un deuxième mode, dans lequel le module client est activé et le module répéteur ou le module extendeur est activé, de sorte que l'équipement nomade est agencé pour remplir à la fois la fonction de client et une fonction de répéteur ou une fonction d'extendeur ;
- des moyens de configuration (16, 43, 44) agencés pour configurer les moyens de communication selon le premier mode lorsque l'équipement nomade ne reçoit pas l'alimentation externe, et selon le deuxième mode lorsque l'équipement nomade reçoit l'alimentation externe via le socle d'alimentation.

2. Equipement nomade selon la revendication 1, dans lequel les moyens de communication comprennent un module répéteur (15) qui est un module répéteur Wi-Fi.

3. Equipement nomade selon la revendication 1, dans lequel les moyens de communication comprennent un module extendeur qui est un module extendeur Wi-Fi, l'équipement nomade comprenant en outre une interface Ethernet (55), l'équipement nomade étant agencé pour être relié au point d'accès sans fil (52) via l'interface Ethernet.

4. Equipement nomade selon l'une des revendications précédentes, dans lequel les moyens de communication (10) comprennent un module émetteur/récepteur (12) comportant une première voie de communication (23) comprenant un premier amplificateur (28) d'une première puissance et une deuxième voie de communication (24) comprenant un deuxième amplificateur (29) d'une deuxième puissance supérieure à la première puissance, la première voie de communication (23) étant désactivée lorsque les moyens de communication sont configurés selon le deuxième mode, la deuxième voie de communication (24) étant désactivée lorsque les moyens de communication sont configurés selon le premier mode.

5. Equipement nomade selon l'une des revendications précédentes, dans lequel les moyens de communication (10) comprennent un module émetteur/récepteur (12), au moins une première antenne (41a, 41b) reliée à au moins une première sortie (40a, 40b) du module émetteur/récepteur et au moins une deuxième antenne (42), les moyens de configuration comprenant un premier interrupteur (43) monté entre une deuxième sortie (40c) du module émetteur/récepteur (12) et la deuxième antenne (42), le premier interrupteur (43) étant ouvert et la deuxième antenne étant déconnectée de la deuxième sortie (40c) du module émetteur/récepteur lorsque les moyens de communication sont configurés selon le premier mode, le premier interrupteur (43) étant fermé et la deuxième antenne étant connectée à la deuxième sortie (40c) du module émetteur/récepteur lorsque les moyens de communication sont configurés selon le deuxième mode.

6. Equipement nomade selon l'une des revendications précédentes, dans lequel les moyens de communication comprennent un module émetteur/récepteur (12) et au moins une première antenne (41a, 41b) reliée au module émetteur/récepteur, les moyens de configuration comprenant un deuxième interrupteur (44) monté entre une troisième sortie (40d) du module émetteur/récepteur et une sortie (47) de l'équipement nomade (1), le deuxième interrupteur (44) étant ouvert et la troisième sortie (40d) du module émetteur/récepteur étant déconnectée de la sortie de l'équipement nomade lorsque les moyens de communication sont configurés selon le premier mode, le deuxième interrupteur (44) étant fermé et la troisième sortie (40d) du module émetteur/récepteur étant connectée via la sortie (47) de l'équipement nomade à au moins une troisième antenne (49) montée sur le socle d'alimentation lorsque les moyens de communication sont configurés selon le deuxième mode.

7. Equipement nomade selon l'une des revendications précédentes, dans lequel les moyens de configuration sont agencés pour faire basculer les moyens de communication (10) depuis le premier mode dans le deuxième mode uniquement au cours d'une phase de réception de signaux du module client (14) ou au cours d'une phase inactive du module client (14).

8. Equipement nomade selon l'une des revendications précédentes, l'équipement nomade étant une enceinte connectée.

9. Procédé de configuration d'un équipement nomade selon l'une des revendications précédentes, comprenant les étapes de :
- détecter si l'équipement nomade (1 ; 50) reçoit ou non l'alimentation externe via le socle d'alimentation ;
- si l'équipement nomade ne reçoit pas l'alimentation externe, configurer les moyens de communication (10) selon le premier mode ;
- si l'équipement nomade reçoit l'alimentation externe, configurer les moyens de communication (10) selon le deuxième mode.

10. Programme d'ordinateur comprenant des instructions qui conduisent l'équipement nomade selon l'une des revendications 1 à 8 à exécuter les étapes du procédé de configuration selon la revendication 9.

11. Support d'enregistrement lisible par ordinateur, sur lequel est enregistré le programme d'ordinateur selon la revendication 10.

## Patentansprüche

1. Roamingvorrichtung, die ausgebildet ist, zu funktionieren, indem sie auf einem Stromversorgungssockel (2; 51) angebracht wird oder nicht, und die umfasst:
- eine Batterie, die dazu bestimmt ist, die Roamingvorrichtung (1; 50) zu speisen, wenn sie keine externe Stromversorgung über den Stromversorgungssockel empfängt;
- Kommunikationsmittel (10), die ein Client-Modul (14) umfassen, sowie ein Repeater-Modul (15) oder ein Extender-Modul, wobei die Kommunikationsmittel gemäß einem ersten Modus konfigurierbar sind, in dem das Client-Modul aktiviert ist und das Repeater-Modul oder das Extender-Modul deaktiviert ist, sodass die Roamingvorrichtung ausgebildet ist, eine Client-Funktion eines drahtlosen Zugangspunktes (3; 52) zu erfüllen, sowie gemäß einem zweiten Modus, in dem das Client-Modul aktiviert ist und das Repeater-Modul oder das Extender-Modul aktiviert ist, sodass die Roamingvorrichtung ausgebildet ist, gleichzeitig die Client-Funktion und eine Repeater-Funktion oder eine Extender-Funktion zu erfüllen;
- Konfigurationsmittel (16, 43, 44), die ausgebildet sind, die Kommunikationsmittel gemäß dem ersten Modus zu konfigurieren, wenn die Roamingvorrichtung die externe Stromversorgung nicht empfängt, und gemäß dem zweiten Modus, wenn die Roamingvorrichtung die externe Stromversorgung über den Stromversorgungssockel empfängt.

2. Roamingvorrichtung nach Anspruch 1, bei der die Kommunikationsmittel ein Repeater-Modul (15) umfassen, das ein Wi-Fi-Repeater-Modul ist.

3. Roamingvorrichtung nach Anspruch 1, bei der die Kommunikationsmittel ein Extender-Modul umfassen, das ein Wi-Fi-Extender-Modul ist, wobei die Roamingvorrichtung ferner eine Ethernet-Schnittstelle (55) umfasst, wobei die Roamingvorrichtung ausgebildet ist, über die Ethernet-Schnittstelle mit dem drahtlosen Zugangspunkt (52) verbunden zu werden.

4. Roamingvorrichtung nach einem der vorhergehenden Ansprüche, bei der die Kommunikationsmittel (10) ein Sender/Empfänger-Modul (12) umfassen, das einen ersten Kommunikationsweg (23) umfasst, der einen ersten Verstärker (28) zur Verstärkung einer ersten Leistung enthält, sowie einen zweiten Kommunikationsweg (24), der einen zweiten Verstärker (29) zur Verstärkung einer zweiten Leistung enthält, die größer als die erste Leistung ist, wobei der erste Kommunikationsweg (23) deaktiviert ist, wenn die Kommunikationsmittel gemäß dem zweiten Modus konfiguriert sind, wobei der zweite Kommunikationsweg (24) deaktiviert ist, wenn die Kommunikationsmittel gemäß dem ersten Modus konfiguriert sind.

5. Roamingvorrichtung nach einem der vorhergehenden Ansprüche, bei der die Kommunikationsmittel ein Sender/Empfänger-Modul (12), mindestens eine erste Antenne (41a, 41b), die mit mindestens einem ersten Ausgang (40a, 40b) des Sender/Empfänger-Moduls verbunden ist, und mindestens eine zweite Antenne (42) umfassen, wobei die Konfigurationsmittel einen ersten Unterbrecher (43) umfassen, der zwischen einem zweiten Ausgang (40c) des Sender/Empfänger-Moduls (12) und der zweiten Antenne (42) geschaltet ist, wobei der erste Unterbrecher (43) offen ist und die zweite Antenne von dem zweiten Ausgang (40c) des Sender/Empfänger-Moduls getrennt ist, wenn die Kommunikationsmittel gemäß dem ersten Modus konfiguriert sind, wobei der erste Unterbrecher (43) geschlossen und die zweite Antenne mit dem zweiten Ausgang (40c) des Sender/Empfänger-Moduls verbunden ist, wenn die Kommunikationsmittel gemäß dem zweiten Modus konfiguriert sind.

6. Roamingvorrichtung nach einem der vorhergehenden Ansprüche, bei der die Kommunikationsmittel ein Sender/Empfänger-Modul (12) und mindestens eine erste Antenne (41a, 41b) umfassen, die mit dem Sender/Empfänger-Modul verbunden ist, wobei die Konfigurationsmittel einen zweiten Unterbrecher (44) umfassen, der zwischen einem dritten Ausgang (40d) des Sender/Empfänger-Moduls und einem Ausgang (47) der Roamingvorrichtung (1) geschaltet ist, wobei der zweite Unterbrecher (44) offen ist und der dritte Ausgang (40d) des Sender/Empfänger-Moduls von dem Ausgang der Roamingvorrichtung getrennt ist, wenn die Kommunikationsmittel gemäß dem ersten Modus konfiguriert sind, wobei der zweite Unterbrecher (44) geschlossen ist und der dritte Ausgang (40d) des Sender/Empfänger-Moduls über den Ausgang (47) der Roamingvorrichtung mit mindestens einer dritten Antenne (49) verbunden ist, die auf dem Stromversorgungssockel angebracht ist, wenn die Kommunikationsmittel gemäß dem zweiten Modus konfiguriert sind.

7. Roamingvorrichtung nach einem der vorhergehenden Ansprüche, bei der die Konfigurationsmittel ausgebildet sind, die Kommunikationsmittel (10) von dem ersten Modus in den zweiten Modus nur während einer Phase des Empfangs von Signalen des Client-Moduls (14) oder während einer inaktiven Phase des Client-Moduls (14) zu schalten.

8. Roamingvorrichtung nach einem der vorhergehenden Ansprüche, wobei die Roamingvorrichtung ein Smart Speaker ist.

9. Konfigurationsverfahren zur Konfiguration einer Roamingvorrichtung nach einem der vorhergehenden Ansprüche, umfassend die Schritte:
- Detektieren, ob die Roamingvorrichtung (1; 50) die externe Stromversorgung über den Stromversorgungssockel empfängt oder nicht;
- wenn die Roamingvorrichtung die externe Stromversorgung nicht empfängt, Konfigurieren der Kommunikationsmittel (10) gemäß dem ersten Modus;
- wenn die Roamingvorrichtung die externe Stromversorgung empfängt, Konfigurieren der Kommunikationsmittel (10) gemäß dem zweiten Modus.

10. Computerprogramm, umfassend Anweisungen, die die Roamingvorrichtung nach einem der Ansprüche 1 bis 8 dazu veranlassen, die Schritte des Konfigurationsverfahrens nach Anspruch 9 auszuführen.

11. Computerlesbarer Aufzeichnungsträger, auf dem das Computerprogramm nach Anspruch 10 gespeichert ist.

## Claims

1. Roaming equipment arranged to operate while being mounted or not mounted on a power supply base (2; 51), and comprising:
· a battery for powering the roaming equipment (1; 50) while it is not receiving an external supply of power via the power supply base;
· communication means (10) comprising a client module (14) and a repeater module (15) or an extender module, the communication means being configurable in a first mode in which the client module is activated and the repeater module or the extender module is deactivated, such that the roaming equipment is arranged to perform a client function of a wireless access point (3; 52), and in a second mode in which the client module is activated and the repeater module or the extender module is also activated, such that the roaming equipment is arranged to perform both the client function and a repeater function or an extender function;
· configuration means (16, 43, 44) arranged to configure the communication means in the first mode while the roaming equipment is not receiving the external supply of power, and in a second mode while the roaming equipment is receiving the external supply of power via the power supply base.

2. Roaming equipment according to claim 1, wherein the communication means comprise a repeater module (15) that is a Wi-Fi repeater module.

3. Roaming equipment according to claim 1, wherein the communication means comprise an extender module that is a Wi-Fi extender module, the roaming equipment further comprising an Ethernet interface (55), the roaming equipment being arranged to be connected to the wireless access point (52) via the Ethernet interface.

4. Roaming equipment according to any preceding claim, wherein the communication means (10) comprise a transceiver module (12) having a first communication channel (23) comprising a first amplifier (28) having a first power and a second communication channel (24) comprising a second amplifier (29) having a second power greater than the first power, the first communication channel (23) being deactivated while the communication means are configured in the second mode, the second communication channel (24) being deactivated while the communication means are configured in the first mode.

5. Roaming equipment according to any preceding claim, wherein the communication means (10) comprise a transceiver module (12), at least one first antenna (41a, 41b) connected to at least one first output (40a, 40b) of the transceiver module and at least one second antenna (42), the configuration means comprising a first switch (43) connected between a second output (40c) of the transceiver module (12) and the second antenna (42), the first switch (43) being open and the second antenna being disconnected from the second output (40c) of the transceiver module while the communication means are configured in the first mode, the first switch (43) being closed and the second antenna being connected to the second output (40c) of the transceiver module while the communication means are configured in the second mode.

6. Roaming equipment according to any preceding claim, wherein the communication means comprise a transceiver module (12) and at least one first antenna (41a, 41b) connected to the transceiver module, the configuration means comprising a second switch (44) connected between a third output (40d) of the transceiver module and an output (47) of the roaming equipment (1), the second switch (44) being open and the third output (40d) of the transceiver module being disconnected from the output of the roaming equipment while the communication means are configured in the first mode, the second switch (44) being closed and the third output (40d) of the transceiver module being connected via the output (47) of the roaming equipment to at least one third antenna (49) mounted on the power supply base while the communication means are configured in the second mode.

7. Roaming equipment according to any preceding claim, wherein the configuration means are arranged to cause the communication means (10) to switch from the first mode to the second mode only during a stage while the client module (14) is receiving signals or else during a stage while the client module (14) is inactive.

8. Roaming equipment according to any preceding claim, the roaming equipment being a smartspeaker.

9. A method of configuring roaming equipment according to any preceding claim, the method comprising the steps of:
· detecting whether the roaming equipment (1; 50) is or is not receiving the external supply of power via the power supply base;
· if the roaming equipment is not receiving the external supply of power, configuring the communication means (10) in the first mode;
· if the roaming equipment is receiving the external supply of power, configuring the communication means (10) in the second mode.

10. A computer program including instructions for causing the roaming equipment according to any one of claims 1 to 8 to execute the steps of the configuration method according to claim 9.

11. A computer-readable storage medium storing the computer program according to claim 10.
